# EUROPEAN PATENT SPECIFICATION

(11) **EP 3 536 594 B1**
(45) Date of publication and mention of the grant of the patent: **08.06.2022**
(21) Application number: 19161218.3
(22) Date of filing: 07.03.2019
(51) Int. Cl.: B60T 8/36, B62J 6/027, B62K 19/38, B62L 3/02

(54) **STRADDLED VEHICLE MOUNTING OF HYDRAULIC AND ENGINE CONTROL UNITS**
BEFESTIGUNG DER HYDRAULIK- UND MOTORSTEUEREINHEITEN EINES GRÄTSCHSITZFAHRZEUGS
MONTAGE DES UNITES DE COMMANDE HYDRAULIQUE ET MOTEUR D'UN VÉHICULE À ENFOURCHER

(30) Priority: 07.03.2018 JP 2018040643; 11.10.2018 JP 2018192758
(43) Date of publication of application: 11.09.2019
(73) Proprietor: YAMAHA HATSUDOKI KABUSHIKI KAISHA, Iwata-shi, Shizuoka 438-8501 (JP)
(72) Inventor: TAKARA, Koji, Iwata-shi, Shizuoka 438-8501 (JP); TSUKAMOTO, Mitsuharu, Iwata-shi, Shizuoka 438-8501 (JP)
(74) Representative: Grünecker Patent- und Rechtsanwälte PartG mbB

(56) References cited:
- EP-A1- 2 213 536
- EP-A1- 2 216 218
- EP-A1- 2 565 090
- JP-A- 2013 103 693

## Description

### TECHNICAL FIELD

The invention relates to a straddled vehicle.

### BACKGROUND

Conventionally, the straddled vehicle is equipped with an engine control unit for controllina the engine. For example, in a motorcycle disclosed in Japanese Laid-Open Application Publication No. 2017-507845, an engine control unit is disposed between a side box under a seat and an accommodation box. European Patent Application Publication No. 2 213 536 discloses the features of the preamble of claim 1 with a configuration where one of a battery and an ABS unit is positioned in front of a head pipe, and the other is disposed to a lateral side of the head pipe and inside a vehicle body cover. As viewed from a lateral side of a vehicle, at least parts of the battery and the ABS unit are positioned more forward than the head pipe. European Patent Application Publication No. 2 565 090 discloses a motorcycle with an ABS braking system, wherein brake piping is connected to the brake levers and to the front and rear brakes via an ABS module. A front upstream coupling member and a front downstream coupling member are arranged in the vicinity of a head pipe. One end of the first front upstream piping is connected to the front upstream coupling member and one end of the first rear upstream piping is connected to the front downstream coupling member. Since the ends the first front upstream piping and the first rear upstream piping are arranged in the vicinity of the head pipe, they are affected less when the motorcycle is steered, and so the length of the brake hose used the piping can be shortened.

### SUMMARY

In recent years, a starter generator for starting an engine and generating electricity has been installed in a straddled vehicle. In such vehicles, the engine control unit includes a regulator connected to the starter generator and a command unit that outputs a command signal to the engine. Therefore, the engine control unit is increased in size and weight.

On the other hand, in straddled vehicle, it is preferable that the distribution of the ground-contacting loads of the front wheel and the rear wheel (front-rear load distribution) is close to 50:50 in view of the operability of the vehicle. However, when the high-weight engine control unit as described above is disposed under the seat, the load on the rear wheel becomes large.

In recent years, an ABS (Antilock Brake System) has been mounted on a straddled vehicle. The ABS includes a hydraulic unit for controlling the brake. Hydraulic unit is a relatively heavy component of the components mounted on the straddled vehicle. Therefore, when the engine control unit is disposed under the seat in the same manner as the engine control unit described above, the load on the rear wheel becomes large.

In particular, in the case of a scooter or an underbone type straddled vehicle, since the load on the rear wheel is originally large, when the engine control unit and the hydraulic unit are disposed below the seat, the load on the rear wheel is further increased. Therefore, in order to make the front-rear load distribution close to 50:50, it is preferable to increase the load distribution on the front wheel.

The inventors of the present invention have devised to arrange the engine control unit and the hydraulic unit together between the head pipe and the headlight in a longitudinal direction of the vehicle in order to bring the front-rear load distribution closer to 50:50. However, since the engine control unit and the hydraulic unit are large in size, it is a problem to secure a space for arranging them.

A brake hose is connected to the hydraulic unit. The brake hose moves in accordance with the movement of the front wheel. Therefore, when the hydraulic unit is disposed at a large distance from the head pipe supporting the front wheel, the movement of the brake hose associated with the movement of the front wheel becomes large. In this case, it becomes difficult to arrange the brake hose to avoid interference with other components.

It is an object of the present invention to provide a straddled vehicle in which the load distribution on the front wheel is increased, the engine control unit and the hydraulic unit are arranged compactly, and the arrangement of the brake hose is facilitated.

A straddled vehicle according to one aspect includes a vehicle body frame including a head pipe, a headlight, an engine, a starter generator, an engine control unit, a steering device, a front wheel, a front brake, ABS (Antilock Brake System) hydraulic unit and a brake hose. The headlight is disposed forward of the head pipe. The engine is supported on the vehicle body frame. The starter generator is configured to generate an electric power and start the engine. The engine control unit includes a command unit for outputting a command signal to the engine and a regulator connected to the starter generator. The steering device is supported by a head pipe. The front wheel is rotatably supported by the steering device. The front brake is configured to brake the front wheel. The brake hose connects the front brake and the hydraulic unit. The engine control unit is disposed between the head pipe and the headlight in the longitudinal direction of the vehicle. The hydraulic unit is disposed between the engine control unit and the head pipe in the longitudinal direction of the vehicle.

According to the straddled vehicle according to present aspect, since the heavy weight hydraulic unit and the engine control unit are disposed between the head pipe and the headlight, the load distribution on the front wheel can be increased. As a result, it is possible to approximate the front-rear load distribution of the vehicle to 50: 50, and the operability of the vehicle can be improved.

Further, the hydraulic unit is disposed between the engine control unit and the head pipe in the longitudinal direction of the vehicle. Therefore, the hydraulic unit can be arranged compactly in front of the head pipe, and the hydraulic unit can be arranged close to the head pipe. As a result, the movement of the brake hose due to the movement of the front wheel can be kept small, and the arrangement of the brake hose is facilitated.

In a plan view of the vehicle, the engine control unit and the hydraulic unit overlap the vehicle center line extending in the longitudinal direction of the vehicle. By thus arranging the heavy engine control unit and the hydraulic unit at the center of the vehicle, it is possible to improve the straight line stability of the vehicle.

In a plan view of the vehicle, the hydraulic unit may overlap at least a part of the engine control unit. In this case, it is possible to arrange the engine control unit and the hydraulic unit compactly.

In a plan view of the vehicle, the hydraulic unit may overlap at least a part of the head pipe and at least a part of the engine control unit. In this case, it is possible to arrange the engine control unit and the hydraulic unit compactly near the head pipe.

In a front view of the vehicle, the hydraulic unit may overlap at least a part of the engine control unit. In this case, it is possible to arrange the engine control unit and the hydraulic unit compactly.

In a front view of the vehicle, the hydraulic unit may overlap at least a part of the head pipe and at least a part of the engine control unit. In this case, it is possible to arrange the engine control unit and the hydraulic unit compactly near the head pipe.

In a side view of the vehicle, an upper end of the hydraulic unit may be located above an upper end of the engine control unit. In this case, access to the hydraulic unit from above is facilitated. This improves the maintainability of the hydraulic unit.

In a side view of the vehicle, a lower end of the hydraulic unit may be located lower than the upper end of the engine control unit. In this case, it is possible to arrange the engine control unit and the hydraulic unit compactly.

The hydraulic unit may include a connection port to which a brake hose is connected. In a side view of the vehicle, the connection port may be located above the engine control unit. In this case, access to the connection port becomes easy. This improves the maintainability of the hydraulic unit.

In a side view of the vehicle, the head pipe may be disposed to be inclined rearward and upward. In the side view of the vehicle, the engine control unit may be disposed to be inclined forward and upward. In this case, a large space for disposing the hydraulic unit can be secured between the head pipe and the engine control unit. Also, access to the hydraulic unit from above is facilitated.

The straddled vehicle may further include a stay. The stay may be attached to the head pipe and support the engine control unit and the hydraulic unit. In this case, the engine control unit and the hydraulic unit are supported by the common stay. Thereby, the number of parts can be reduced.

The headlight may be supported by the stay. In this case, the headlight, the engine control unit and the hydraulic unit are supported by the common stay. Thereby, the number of parts can be reduced.

The straddled vehicle may further include a seat disposed rearward of the head pipe. In a side view of the vehicle, the engine may be arranged below the seat. In this case, the fact that the front-rear load distribution tends to be greatly biased toward the rear side due to the weight of the engine can be alleviated by the heavy-weight hydraulic unit and the engine control unit.

### BRIEF DESCRIPTION OF THE DRAWINGS

FIG. 1 is a side view of a straddled vehicle according to an embodiment.
FIG. 2 is a front view of the straddled vehicle.
FIG. 3 is a perspective view of the front portion of the straddled vehicle.
FIG. 4 is an enlarged side view of the front portion of the straddled vehicle.
FIG. 5 is a perspective view of an engine control unit.
FIG. 6 is a front view of the engine control unit.
FIG. 7 is a rear view of the engine control unit.
FIG. 8 is a side view of the engine control unit.
FIG. 9 is a perspective view of a head pipe accommodating portion.
FIG. 10 is a rear view of the head pipe accommodating portion.
FIG. 11 is a XI-XI cross-sectional view in FIG. 4.
FIG. 12 is a XII-XII cross-sectional view in FIG. 4.
FIG. 13 is a side view showing an internal structure of the head pipe accommodating portion.
FIG. 14 is a top view showing the internal structure of the head pipe accommodating portion.
FIG 15 is a side view showing the internal structure of the head pipe accommodating portion in which the headlight is omitted.
FIG 16 is a diagram showing the internal structure of the head pipe accommodating portion in which a headlight is omitted, as viewed from an obliquely upper front side.

### DETAILED DESCRIPTION OF THE PREFERRED EMBODIMENTS

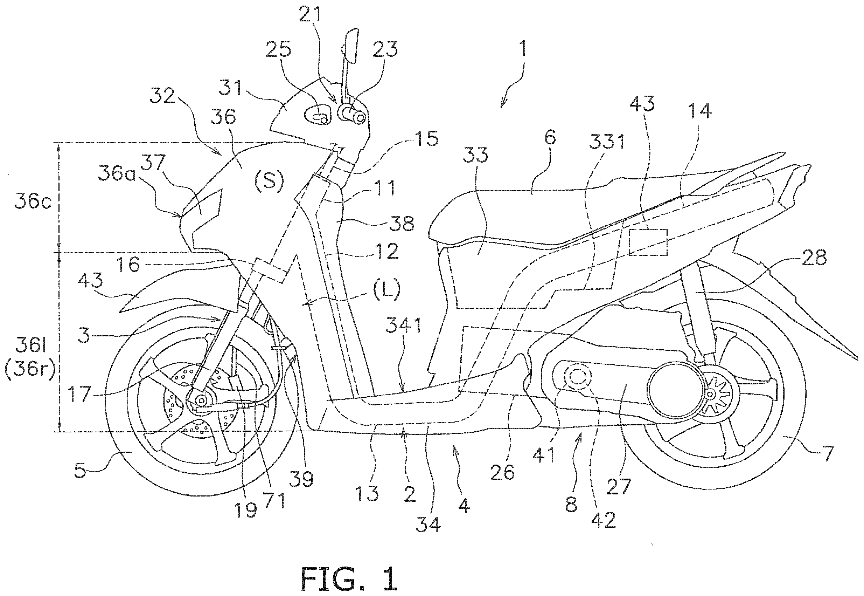

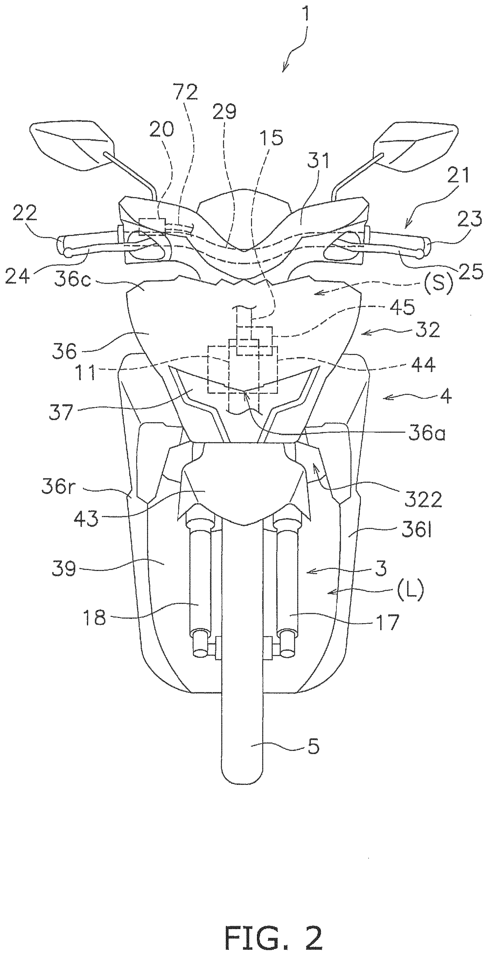

Referring to the drawings, a straddled vehicle 1 according to an embodiment will be described below. FIG 1 is a side view of the straddled vehicle 1. FIG 2 is a front view of the straddled vehicle 1. The straddled vehicle 1 according to the present embodiment is a scooter type vehicle. As shown in FIG 1, the straddled vehicle 1 includes a vehicle body frame 2, a steering device 3, a vehicle body cover 4, a front wheel 5, a seat 6, a rear wheel 7, and a power unit 8.

In this specification, the directions such as "front", "rear", "up", "down", "left", and "right" of the straddled vehicle 1 are directions as viewed from the rider of the straddled vehicle 1. The front and rear directions do not only indicate directions parallel to a longitudinal direction of the straddled vehicle 1, but include directions inclined by ±45° with respect to the longitudinal direction of the straddled vehicle 1. In other words, a direction closer to the longitudinal direction than the vehicle width direction and the vertical direction is included in the front or rear direction.

Similarly, the up and down directions include directions inclined by ±45° with respect to the vertical direction of the straddled vehicle 1. In other words, a direction closer to the vertical direction than the longitudinal direction and the vehicle width direction is included in the up or down direction.

Further, the left and right directions include directions inclined by ±45° with respect to the vehicle width direction of the straddled vehicle 1. In other words, a direction closer to the vehicle width direction than the longitudinal direction and the vertical direction is included in the left or right direction.

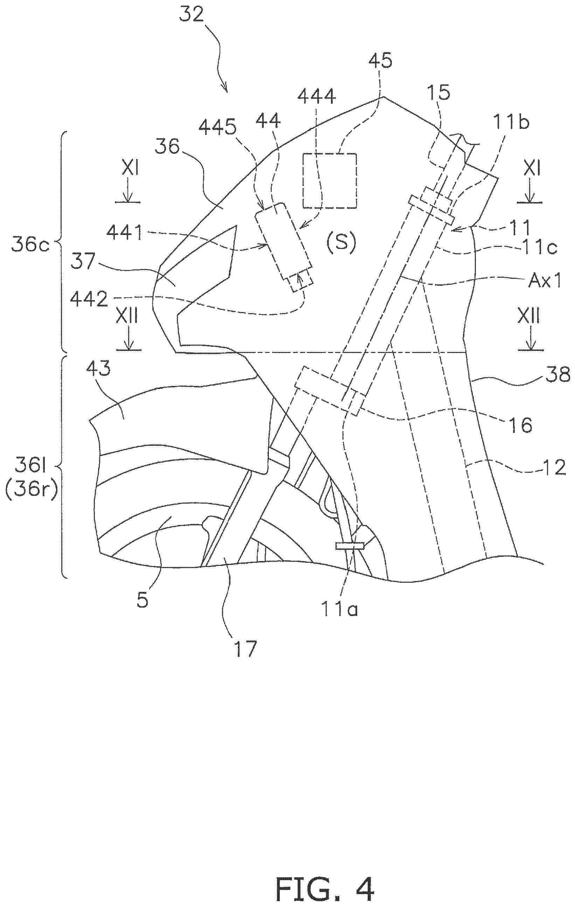

The vehicle body frame 2 includes a head pipe 11, a down frame 12, a lower frame 13, and a rear frame 14. In a side view of the vehicle, the head pipe 11 is disposed inclined rearward and upward. As shown in FIG 4, the head pipe 11 extends rearward from the lower opening end 11a toward the upper opening end 11b. The down frame 12 extends downward from the head pipe 11. More specifically, in a side view of the vehicle, the down frame 12 is connected to the rear end edge 11c of the head pipe 11 extending rearward from the lower opening end 11a toward the upper opening end 11b. The lower frame 13 is connected to the lower portion of the down frame 12. The lower frame 13 extends rearward from the lower portion of the down frame 12. The rear frame 14 is connected to the lower frame 13. The rear frame 14 extends rearward and upward from the rear portion of the down frame 12.

The steering device 3 is supported by the head pipe 11. The steering device 3 includes a steering shaft 15, an under bracket 16, a left suspension 17, and a right suspension 18. The steering shaft 15 is inserted into the head pipe 11. The steering shaft 15 is supported by the head pipe 11 so as to be rotatable in the left and right directions. The under bracket 16 is connected to the lower portion of the steering shaft 15. The under bracket 16 is disposed below the head pipe 11.

An upper end portion of the left suspension 17 and an upper end portion of the right suspension 18 are connected to the under bracket 16. The front wheel 5 is rotatably supported by the left suspension 17 and the right suspension 18. A front brake 19 is attached to the front wheel 5. The front brake 19 brakes the front wheel 5. The front brake 19 is, for example, a disc brake.

An upper portion of the steering shaft 15 is connected to a handle 21. As shown in FIG 2, the handle 21 includes a first grip 22, a second grip 23, and a handlebar 29. The first grip 22 and the second grip 23 are attached to both ends of the handlebar 29. In the present embodiment, the first grip 22 is disposed on the right side of a handle cover 31, which will be described later. The second grip 23 is disposed on the left side of the handle cover 31.

A first lever member 24 is disposed in front of the first grip 22. The first lever member 24 is a brake lever. A master cylinder 20 is connected to the first lever member 24. A second lever member 25 is disposed in front of the second grip 23. The second lever member 25 is a brake lever.

The vehicle body cover 4 includes the handle cover 31, a head pipe accommodating portion 32, a rear cover 33, and a lower cover 34. The handle cover 31 covers the front and the rear of the handle 21. A meter panel including a speedometer and the like is attached to the upper surface of the handle cover 31.

The head pipe accommodating portion 32 is disposed below the handle cover 31. The head pipe accommodating portion 32 covers the periphery of the head pipe 11 and the down frame 12. The head pipe accommodating portion 32 is disposed forward and rearward of the head pipe 11. The head pipe accommodating portion 32 is disposed in front of and behind the down frame 12. The head pipe accommodating portion 32 overlaps with the head pipe 11 in the front view of the vehicle. The lower portion of the head pipe accommodating portion 32 is connected to the lower cover 34. The head pipe accommodating portion 32 includes a front cover 36, a back cover 38, and a mud cover 39.

The front cover 36 is disposed below the handle cover 31 in the vertical direction of the vehicle. At least a part of the front cover 36 is disposed in front of the head pipe 11. In the front view of the vehicle, the front cover 36 overlaps with the head pipe 11.

A headlight 37 is disposed on the front cover 36. The headlight 37 is disposed in front of the head pipe 11. The headlight 37 overlaps the head pipe 11 in the front view of the vehicle. The headlight 37 constitutes a part of the head pipe accommodating portion 32. The headlight 37 and the flashers may not be disposed in the head pipe accommodating portion 32, and may be disposed in the handle cover 31, for example.

The front cover 36 includes a central cover portion 36c, a right cover portion 36r, and a left cover portion 36l. The central cover portion 36c is disposed above the front wheel 5. The right cover portion 36r extends downward from the right side portion of the central cover portion 36c. The left cover portion 36l extends downward from the left side of the central cover portion 36c. The central cover portion 36c includes a distal end portion 36a which is a mounting hole for the headlight 37. The central cover portion 36c extends rearward and upward from the distal end portion 36a. The central cover portion 36c extends rearward and rightward from the distal end portion 36a and extends rearward and leftward from the distal end portion 36a.

The mud cover 39 is disposed behind the front wheel 5. The mud cover 39 overlaps the front wheel 5 in the front view of the vehicle. The mud cover 39 is disposed in front of the down frame 12. At least a part of the mud cover 39 overlaps the down frame 12 in the front view of the vehicle. The mud cover 39 is connected to the right cover portion 36r and the left cover portion 36l. The back cover 38 is disposed behind the front cover 36. At least a part of the back cover 38 is disposed behind the head pipe 11. At least a part of the back cover 38 overlaps with the head pipe 11 in the front view of the vehicle, as shown in FIG 2.

An inner space S for accommodating the head pipe 11 is formed between the center cover portion 36c of the front cover 36 and the back cover 38. A lower space L for accommodating the down frame 12 is formed between the mud cover 39 and the back cover 38. The back cover 38 will be described later.

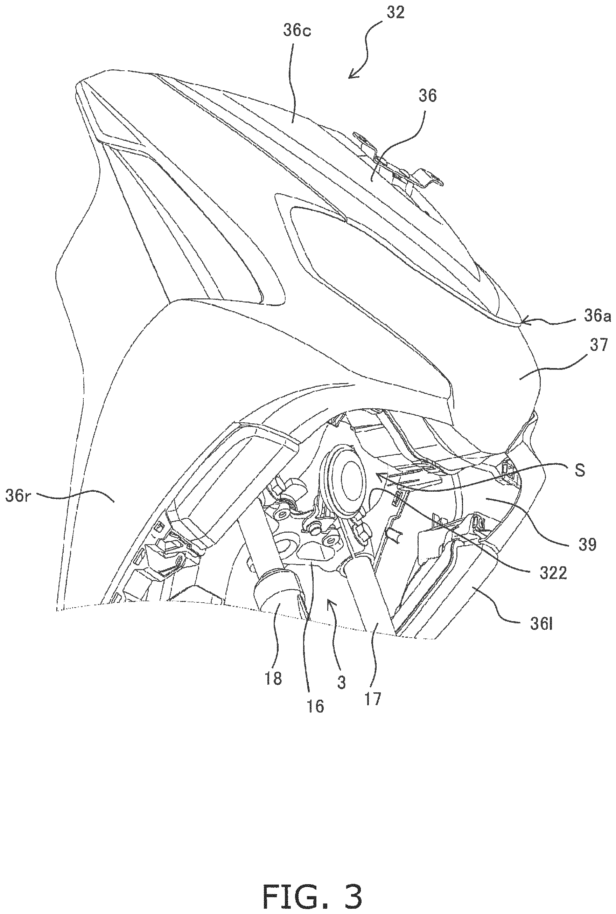

FIG 3 is a perspective view of the front portion of the straddled vehicle 1. As shown in FIGS. 2 and 3, the head pipe accommodating portion 32 includes an opening portion 322. The opening portion 322 is formed in a lower portion of the inner space S of the head pipe accommodating portion 32 and communicates with the inner space S. The opening portion 322 is opened downward. The steering device 3 is arranged through the opening portion 322. A part of the opening portion 322 is defined by a headlight 37. The opening portion 322 is disposed above the top of the front wheel 5.

As shown in FIG 1, the rear cover 33 covers the periphery of the rear frame 14. The seat 6 is disposed above the rear cover 33. The seat 6 is disposed behind the head pipe 11. A storage box 331 is disposed in the rear cover 33. The storage box 331 is disposed below the seat 6.

The lower cover 34 is disposed between the head pipe accommodating portion 32 and the rear cover 33. The lower cover 34 covers the periphery of the lower frame 13. The upper surface of the lower cover 34 includes a footboard 341. A foot board 341 is disposed below and forward of the seat 6. The foot board 341 is disposed above the lower frame 13. The footboard 341 is provided so that the rider rests his/her feet. The foot board 341 has a flat shape in the vehicle width direction. However, the footboard 341 may not have a flat shape. For example, a central tunnel portion having a shape protruding upward and extending in the longitudinal direction of the vehicle may be provided at the center of the footboard 341.

The power unit 8 is disposed below the seat 6. The power unit 8 is swingably supported by the vehicle body frame 2. The power unit 8 rotatably supports the rear wheel 7. The rear wheel 7 is supported by the vehicle body frame 2 via a rear suspension 28. The power unit 8 includes an engine 26 and a transmission 27.

The engine 26 is disposed below and rearward of the head pipe 11. The engine 26 is disposed rearward of the head pipe accommodating portion 32. The engine 26 is disposed in the rear cover 33. The engine 26 is disposed below the seat 6. That is, the engine 26 overlaps with the seat 6 in a plan view of the vehicle. The engine 26 is disposed below the storage box 331.

A starter generator 41 is attached to the engine 26. The starter generator 41 is attached to a crankshaft 42 of the engine 26. The starter generator 41 has a function as a starter for starting the engine 26 and a function as a generator for generating power by the driving force of the engine 26.

FIG 4 is an enlarged side view of the front portion of the straddled vehicle 1. As shown in FIG 4, the straddled vehicle 1 includes an engine control unit 44 and a hydraulic unit 45 for ABS. The engine control unit 44 and the hydraulic unit 45 are disposed in the inner space S of the head pipe accommodating portion 32. More specifically, the engine control unit 44 and the hydraulic unit 45 are disposed in an inner space S formed between the central cover portion 36c of the front cover 36 and the back cover 38.

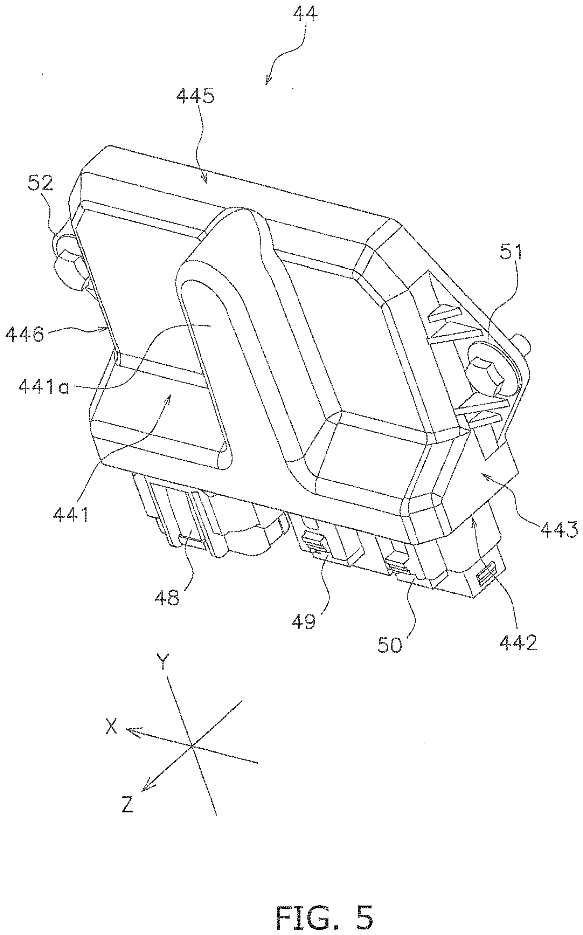

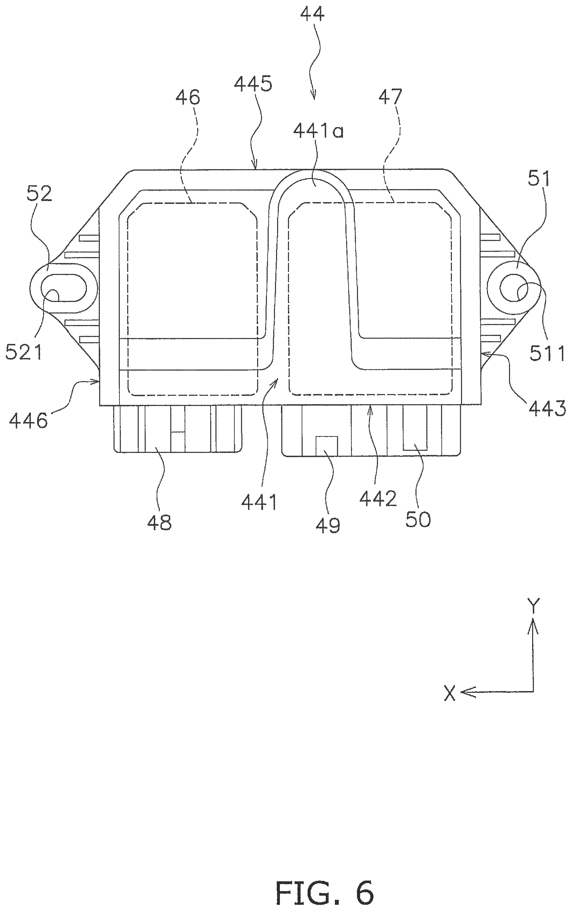

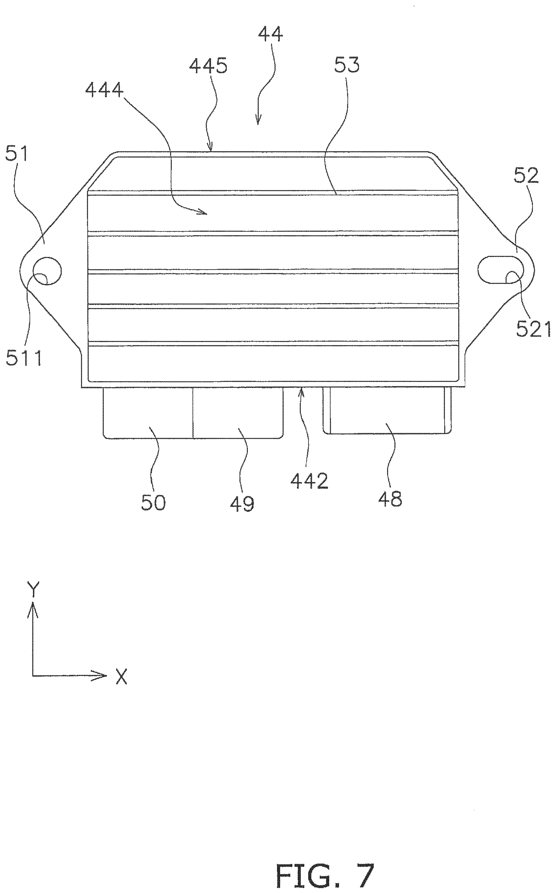

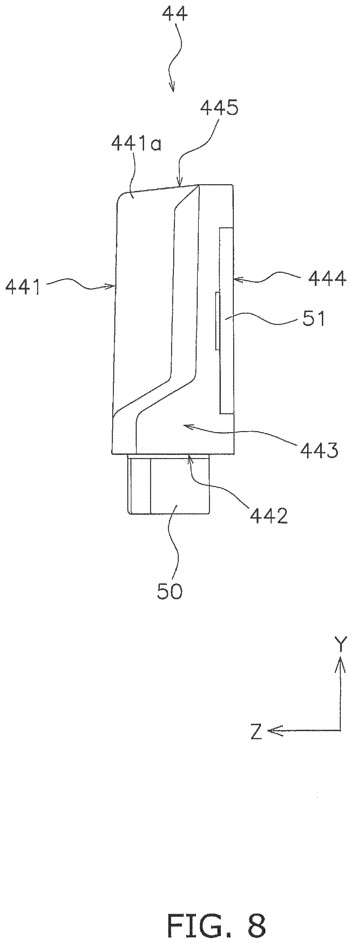

The engine control unit 44 controls the engine 26. For example, the engine control unit 44 controls fuel injection and ignition timing in the engine 26. FIG. 5 is a perspective view of the engine control unit 44. FIG 6 is a front view of the engine control unit 44. FIG 7 is a rear view of the engine control unit 44. FIG 8 is a side view of the engine control unit 44.

As shown in FIGS. 5 to 8, the engine control unit 44 has dimensions larger in the length direction (Y) and the width direction (X) than in the thickness direction (Z) of the engine control unit 44. The engine control unit 44 has a dimension larger in the width direction (X) than in the length direction (Y) of the engine control unit 44. Here, the thickness direction (Z) of the engine control unit 44 refers to a direction in which the smallest dimension of the spatial coordinate system (X, Y, Z) extends in the engine control unit 44.

The engine control unit 44 is disposed in front of the head pipe 11. As shown in FIG 2, the engine control unit 44 overlaps at least a part of the head pipe 11 in the front view of the vehicle.

The engine control unit 44 includes a first heat dissipation surface 441 and a second heat dissipation surface 444. The first heat dissipation surface 441 is a front surface of the engine control unit 44. The second heat dissipation surface 444 is located on the opposite side of the first heat dissipation surface 441. The second heat dissipation surface 444 is a rear surface of the engine control unit 44.

The engine control unit 44 includes a first side surface 442, a second side surface 443, a third side surface 445, and a fourth side surface 446. The first side surface 442 is connected to the lower end of the first heat dissipation surface 441. The first side surface 442 is a lower surface of the engine control unit 44. The second side surface 443 is a left side surface of the engine control unit 44. The third side surface 445 is connected to the upper end of the first heat dissipation surface 441. The third side surface 445 is an upper surface of the engine control unit 44. The fourth side surface 446 is a right side surface of the engine control unit 44.

The first heat dissipation surface 441 and the second heat dissipation surface 444 extend in the length direction (Y) and the width direction (X) of the engine control unit 44. The first heat dissipation surface 441 and the second heat dissipation surface 444 have a shape larger in the width direction (X) than in the length direction (Y). The first side surface 442 and the third side surface 445 extend in the width direction (X) and the thickness direction (Z) of the engine control unit 44. The first side surface 442 and the third side surface 445 have a shape larger in the width direction (X) than in the thickness direction (Z). The second side surface 443 and the fourth side surface 446 extend in the length direction (Y) and the thickness direction (Z) of the engine control unit 44. The second side surface 443 and the fourth side surface 446 have a shape larger in the length direction (Y) than in the thickness direction (Z).

The area of the first heat dissipation surface 441 projected in the normal direction of the first heat dissipation surface 441 is larger than the area of the first side surface 442 projected in the normal direction of the first side surface 442. The area of the first heat dissipation surface 441 projected in the normal direction of the first heat dissipation surface 441 is larger than the area of the first side surface 442 projected in the normal direction of the second side surface 443. The second heat dissipation surface 444 has the same projected area as the first heat dissipation surface 441. The third side surface 445 has the same projected area as the first side surface 442. The fourth side surface 446 has the same projected area as the second side surface 443.

As shown in FIG 6, the engine control unit 44 includes a command unit 46 and a regulator 47. The command unit 46 outputs a command signal to the engine 26. The regulator 47 is connected to the starter generator 41 and the battery 43 via an electric cable 65, which will be described later, and rectifies the electric power generated by the starter generator 41 to control the voltage thereof. The command unit 46 and the regulator 47 are aligned in the width direction (X) of the engine control unit 44.

The engine control unit 44 includes a plurality of connectors 48 to 50. The plurality of connectors 48 to 50 are attached to the first side surface 442. The plurality of connectors 48 to 50 are aligned in the width direction (X) of the engine control unit 44. The plurality of connectors 48 to 50 project downwardly from the first side surface 442.

The plurality of connectors 48 to 50 include a first connector 48, a second connector 49, and a third connector 50. The first connector 48 is connected to the command unit 46. The second connector 49 and the third connector 50 are connected to the regulator 47.

The engine control unit 44 includes a first mounting portion 51 and a second mounting portion 52. The first mounting portion 51 and the second mounting portion 52 are provided on both side surfaces of the engine control unit 44. The first mounting portion 51 and the second mounting portion 52 each include holes 511 and 521 through which bolts are inserted.

As shown in FIG 5, the first heat dissipation surface 441 includes a convex portion 441a protruding in the thickness direction (Z). The first heat dissipation surface 441 has an uneven shape due to the convex portion 441a. As shown in FIG 7, the engine control unit 44 includes a plurality of ribs 53. The plurality of ribs 53 are provided on the second heat dissipation surface 444. The second heat dissipation surface 444 has an uneven shape due to the plurality of ribs 53. The plurality of ribs 53 extend in the width direction (X). In FIG 7, only one of the plurality of ribs 53 is denoted by the reference numeral 53, and the reference numerals of the other ribs 53 are omitted.

As shown in FIG. 4, the engine control unit 44 is disposed in front of the head pipe 11. In a side view of the vehicle, the engine control unit 44 is disposed so as to face the thickness direction (Z) in a direction inclined with respect to a direction perpendicular to the axial Ax1 of the head pipe 11. In a side view of the vehicle, the thickness direction (Z) of the engine control unit 44 extends forward and downward.

As shown in FIG. 2, at least a part of the engine control unit 44 overlaps with the head pipe 11 in the front view of the vehicle. The engine control unit 44 is disposed with the width direction (X) facing the vehicle width direction. That is, the width direction (X) of the engine control unit 44 extends in the vehicle width direction.

As shown in FIG. 2, at least a part of the engine control unit 44 overlaps the headlight 37 in the front view of the vehicle. In the front view of the vehicle, the upper end of the engine control unit 44 is located above the upper end of the headlight 37. In the front view of the vehicle, the lower end of the engine control unit 44 is located above the lower end of the headlight 37.

In a side view of the vehicle, the engine control unit 44 is disposed to be inclined forward and upward. More specifically, in a side view of the vehicle, the first heat dissipation surface 441 of the engine control unit 44 extends forward and upward. In a side view of the vehicle, the first heat dissipation surface 441 extends in a direction crossing the axial direction (Ax1) of the head pipe 11. In a side view of the vehicle, the first heat dissipation surface 441 is inclined with respect to the axial direction (Ax1) of the head pipe 11. In a side view of the vehicle, the first heat dissipation surface 441 extends forward and upward.

In the front view of the vehicle, the first heat dissipation surface 441 extends in the vehicle width direction. In the front view of the vehicle, the first side surface 442 extends in the vehicle width direction. In a side view of the vehicle, the first side surface 442 extends in a direction different from the first heat dissipation surface 441. In a side view of the vehicle, the first side surface 442 extends forward and downward. In a side view of the vehicle, the first side surface 442 is inclined with respect to the axial direction (Ax1) of the head pipe 11.

The second heat dissipation surface 444 of the engine control unit 44 is disposed in the same direction as the first heat dissipation surface 441. The third side surface 445 of the engine control unit 44 is disposed in the same direction as the first side surface 442. The fourth side surface 446 of the engine control unit 44 is disposed in the same direction as the second side surface 443. However, the direction of these planes may be changed.

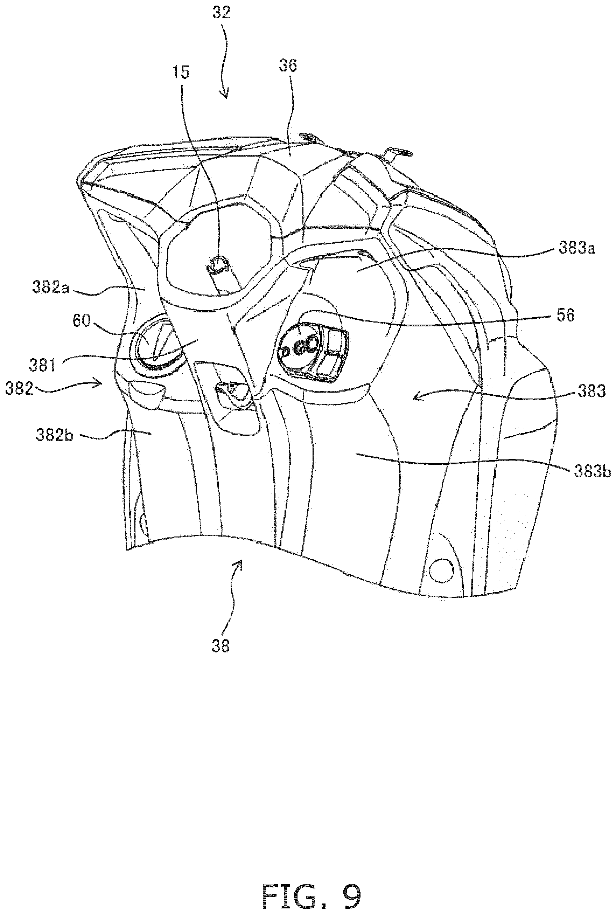

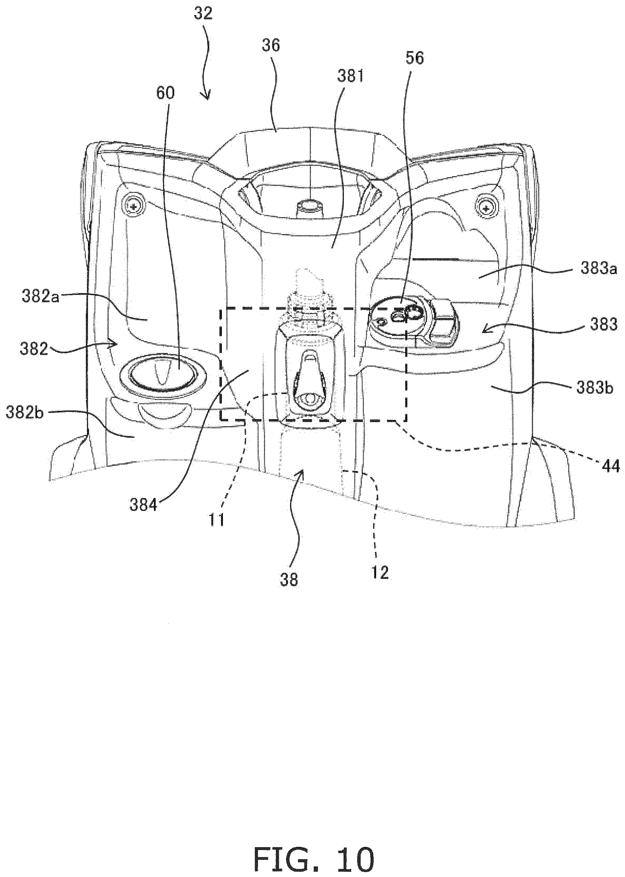

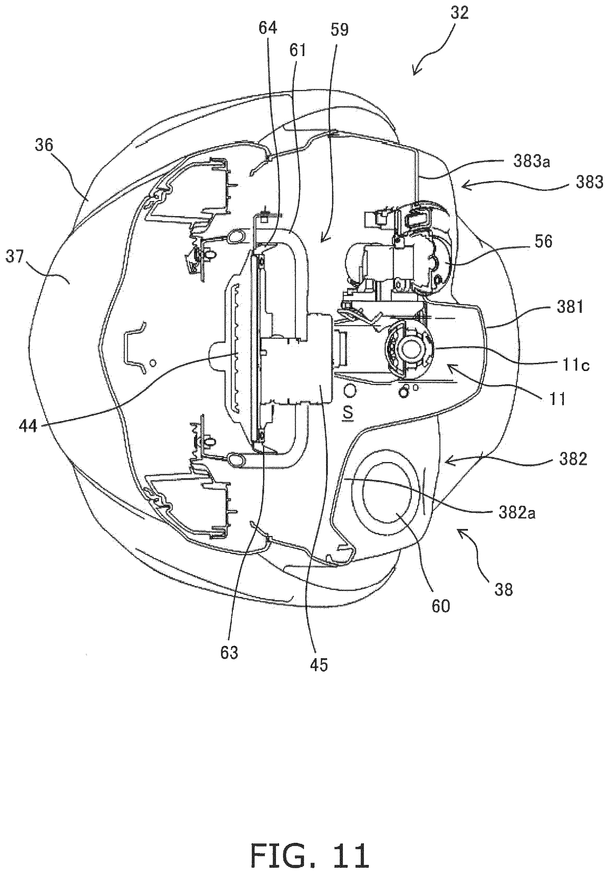

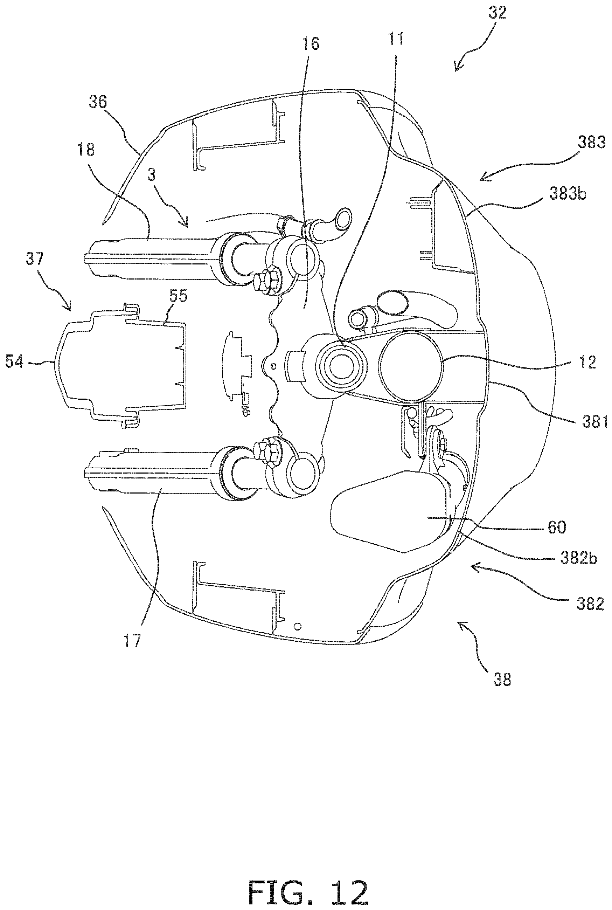

The engine control unit 44 is disposed in the inner space S of the head pipe accommodating portion 32. FIG 9 is a perspective view of the head pipe accommodating portion 32. FIG 10 is a rear view of the head pipe accommodating portion 32. FIG. 11 is a XI-XI cross-sectional view in FIG 4. FIG. 12 is a XII-XII cross-sectional view in FIG 4.

As shown in FIGS. 9 and 10, the back cover 38 includes a center portion 381, a left side portion 382, and a right side portion 383. The center portion 381 overlaps the head pipe 11 in a rear view of the vehicle. The left side portion 382 is located on the left side of the center portion 381. At least a part of the left side portion 382 is located forward of the rear end edge 11c of the head pipe 11. The right side portion 383 is located on the right side of the center portion 381. At least a part of the right side portion 383 is located forward of the rear end edge 11c of the head pipe 11.

The back cover 38 is provided with a fuel filler 60. In the plan view of the vehicle, the fuel filler 60 is disposed on one lateral side with respect to the head pipe 11. More specifically, in the plan view of the vehicle, the fuel filler 60 is disposed on the left side of the head pipe 11. The fuel filler 60 is provided on the left side section 382. The left side section 382 includes an upper left portion 382a and a lower left portion 382b. The upper left portion 382a has a shape concave forward from the lower left portion 382b. The fuel filler 60 is provided in the upper left portion 382a. As shown in FIG 11, the upper left portion 382a is located forward of the rear end edge 11c of the head pipe 11. The upper left portion 382a is located forward of the rear end edge 11c of the head pipe 11.

The back cover 38 is provided with a main switch 56. In the plan view of the vehicle, the main switch 56 is disposed on the other lateral side with respect to the head pipe 11. More specifically, in the plan view of the vehicle, the main switch 56 is disposed on the right side of the head pipe 11. The main switch 56 is provided on the right side portion 383. The right side portion 383 includes an upper right portion 383a and a lower right portion 383b. The upper right portion 383a has a shape concave forward from the lower right portion 383b. The main switch 56 is provided in the upper right portion 383a. The upper right portion 383a is located forward of the rear end edge 11c of the head pipe 11. The upper right portion 383a is located forward of the rear end edge 11c of the head pipe 11. However, the arrangement of the fuel filler 60 and the main switch 56 may be changed.

As shown in FIG. 11, in the plan view of the vehicle, the engine control unit 44 is disposed forward of the fuel filler 60. In the plan view of the vehicle, the engine control unit 44 is disposed forward of the main switch 56.

As shown in FIG 10, the back cover 38 includes an overlapping portion 384 that overlaps with the engine control unit 44 in a rear view. The overlapping portion 384 spans the center portion 381, the upper left portion 382a, and the upper right portion 383a. The portion of the overlapping portion 384 included in the upper left portion 382a is located forward of the rear end edge 11c of the head pipe 11. The portion of the overlapping portion 384 included in the upper right portion 383a is located forward of the rear end edge 11c of the head pipe 11.

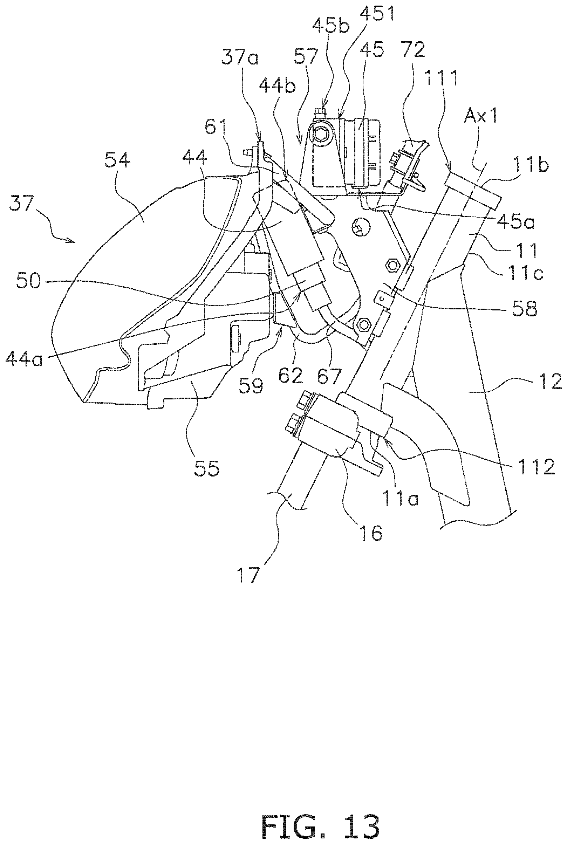

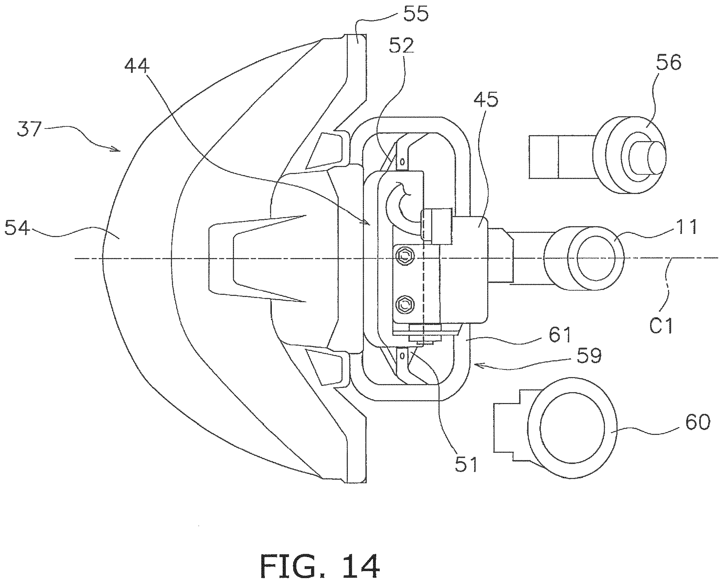

FIG. 13 is a side view showing the internal structure of the head pipe accommodating portion 32. FIG. 14 is a top view showing the internal structure of the head pipe accommodating portion 32. As shown in FIGS. 11 to 14, the engine control unit 44 is disposed between the head pipe 11 and the headlight 37 in the longitudinal direction of the vehicle.

As shown in FIG. 13, in a side view of the vehicle, the engine control unit 44 overlaps at least a part of the headlight 37. In particular, the headlight 37 includes a clear cover 54 and a housing 55. The clear cover 54 is formed of a light-transmitting material. A part of the clear cover 54 is exposed to the outside from the head pipe accommodating portion 32. The housing 55 is disposed behind the clear cover 54. In a side view of the vehicle, the engine control unit 44 overlaps the housing 55.

The upper end 44b of the engine control unit 44 is located lower than the upper end 111 of the head pipe 11. The lower end 44a of the engine control unit 44 is located above the lower end 112 of the head pipe 11. The lower end 44a of the engine control unit 44 is located above the under bracket 16.

As shown in FIG 14, in the plan view of the vehicle, the engine control unit 44 overlaps the vehicle centerline C1 extending in the longitudinal direction of the vehicle. The engine control unit 44 is smaller than the headlight 37 in the vehicle width direction. In the plan view of the vehicle, the left and right end portions of the engine control unit 44 are located inward in the vehicle width direction from the left and right end portions of the headlight 37. That is, in the plan view of the vehicle, the left end portion of the engine control unit 44 is located rightward of the left end portion of the headlight 37. In the plan view of the vehicle, the right end portion of the engine control unit 44 is located leftward of the right end portion of the headlight 37.

As shown in FIG 13, the straddled vehicle 1 includes a stay 57 attached to the head pipes 11. The headlight 37 is supported by the stay 57. The engine control unit 44 and the hydraulic unit 45 are supported by the stay 57. The stay 57 includes a first stay 58 and a second stay 59. The first stay 58 is attached to the head pipe 11. The first stay 58 extends forward from the head pipe 11. The second stay 59 is supported by the first stay 58. The headlight 37 is attached to the second stay 59.

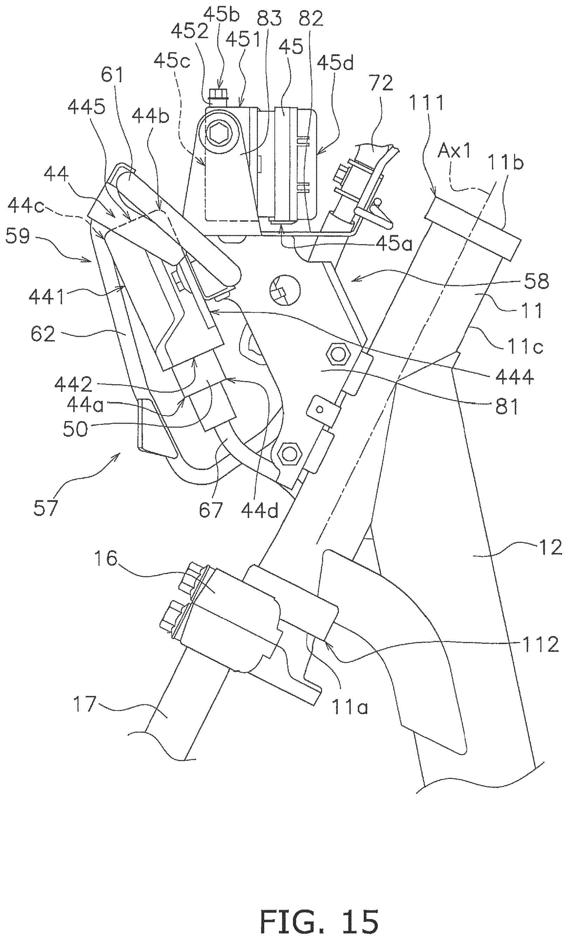

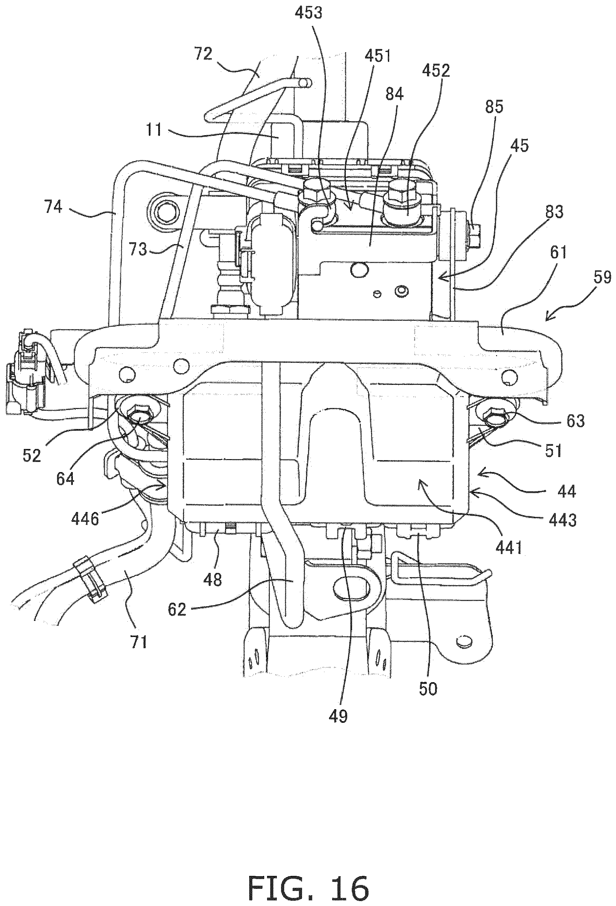

FIG 15 is a side view showing the internal structure of the head pipe accommodating portion 32 in which the headlight 37 is omitted. FIG 16 is a diagram showing the internal structure of the head pipe accommodating portion 32 in which the headlight 37 is omitted, as viewed from the obliquely upper front side. As shown in FIGS. 15 and 13, the second stay 59 includes a first support portion 61 and a second support portion 62. The first support portion 61 is attached to the first stay 58. The first support portion 61 has a bent annular shape. In a side view of the vehicle, the first support portion 61 extends forward and upward from the first stay 58.

The second support portion 62 is connected to the first support portion 61. In a side view of the vehicle, the second support portion 62 extends downward from the first support portion 61. The headlight 37 is attached to the first support portion 61 and the second support portion 62.

The engine control unit 44 is attached to the first support portion 61. More specifically, as shown in FIG 16, the first mounting portion 51 of the engine control unit 44 is attached to the first support portion 61 by fixing means 63 such as bolts. The second mounting portion 52 of the engine control unit 44 is attached to the first support portion 61 by fixing means 64 such as bolts.

An electric cable 65 is connected to the engine control unit 44. The electrical cable 65 is connected to the first to third connectors 48 to 50. The electrical cable 65 includes a plurality of communication lines connected to the first connector 48. A part of the plurality of communication lines is connected to various sensors such as a sensor for detecting the engine rotation speed. Part of the plurality of communication lines is connected to a device such as a fuel injection device, a spark plug, or the like of the engine 26. The electrical cable 65 includes a power line connected to the second connector 49 and the third connector 50. The power line is connected to the starter generator 41 and the battery 43.

An electrical cable 65 extends downward and rearward from the engine control unit 44. The electric cable 65 extends from the engine control unit 44 toward the head pipe 11. Although not shown, the electric cable 65 extends downward along the down frame 12.

As shown in FIG 16, a first brake hose 71 and a second brake hose 72 are connected to the hydraulic unit 45. The first brake hose 71 connects the front brake 19 and the hydraulic unit 45. The second brake hose 72 connects the hydraulic unit 45 and the master cylinder 20. The hydraulic unit 45 is connected to the engine control unit 44 by a communication line. The hydraulic unit 45 controls the front brake 19.

The hydraulic unit 45 is disposed in front of the head pipe 11. The hydraulic unit 45 is disposed between the headlight 37 and the head pipe 11 in the longitudinal direction of the vehicle. The hydraulic unit 45 is disposed between the head pipe 11 and the engine control unit 44 in the longitudinal direction of the vehicle. The hydraulic unit 45 is disposed behind the engine control unit 44.

As shown in FIG. 15, the hydraulic unit 45 is attached to the first stay 58. More specifically, the first stay 58 includes a connecting portion 81, a base portion 82, and a holding portion 83. The connecting portion 81 is connected to the head pipe 11. The connecting portion 81 extends upward from the head pipe 11. The base portion 82 is supported by the connecting portion 81. The base portion 82 is parallel to the vehicle width direction. The base portion 82 is parallel to the longitudinal direction of the vehicle. However, the base portion 82 may be inclined with respect to the vehicle width direction or the longitudinal direction of the vehicle. The hydraulic unit 45 is disposed on the base portion 82.

The holding portion 83 extends upward from the base portion 82. The holding portion 83 is disposed on the lateral side of the hydraulic unit 45. As shown in FIG 16, the hydraulic unit 45 is attached to the holding portion 83 via a bracket 84. The bracket 84 is attached to the holding portion 83 by a fixing member 85 such as a bolt. In other drawings except for FIG 16, the bracket 84 is omitted.

As shown in FIG. 15, in a side view of the vehicle, the lower end 45a of the hydraulic unit 45 is located above the lower end 44a of the engine control unit 44. In a side view of the vehicle, the lower end 45a of the hydraulic unit 45 is located lower than the upper end 44b of the engine control unit 44. In a side view of the vehicle, the lower end 45a of the hydraulic unit 45 is located lower than the upper end 111 of the head pipe 11. In a side view of the vehicle, the lower end 45a of the hydraulic unit 45 is located lower than the upper end 37a of the headlight 37. In a side view of the vehicle, the upper end 45b of the hydraulic unit 45 is located above the upper end 44b of the engine control unit 44. In a side view of the vehicle, the upper end 45b of the hydraulic unit 45 is located above the upper end 111 of the head pipe 11. As shown in FIG 13, the upper end 45b of the hydraulic unit 45 is located above the upper end 37a of the headlight 37.

The hydraulic unit 45 includes an upper surface 451. The upper surface 451 is arranged in parallel with the vehicle width direction. The upper surface 451 is disposed in parallel with the longitudinal direction of the vehicle. In a side view of the vehicle, the upper surface 451 is located above the upper end 44b of the engine control unit 44. In a side view of the vehicle, the upper surface 451 is located above the upper end 111 of the head pipe 11. The upper surface 451 is located above the upper end 37a of the headlight 37.

As shown in FIG 16, in vehicle side view, hydraulic unit 45 includes first connection port 452 and second connection port 453. The first connection port 452 and the second connection port 453 are disposed on the upper surface 451 of the hydraulic unit 45. The first connection port 452 and the second connection port 453 are aligned in the vehicle width direction. The first connection port 452 and the second connection port 453 are located above the upper end 44b of the engine control unit 44. The first connection port 452 and the second connection port 453 are located above the upper end 111 of the head pipe 11. The first connection port 452 and the second connection port 453 are located above the upper end 37a of the headlight 37.

The first brake hose 71 is connected to the first connection port 452. The second brake hose 72 is connected to the second connection port 453. In detail, a first hose bracket 73 that has a tubular shape is attached to the first connection port 452. The first brake hose 71 is connected to the first connection port 452 via the first hose bracket 73. A second hose bracket 74 that has a tubular shape is attached to the second connection port 453. The second brake hose 72 is connected to the second connection port 453 via the second hose bracket 74. In other drawings except for FIG. 16, the first hose bracket 73 and the second hose bracket 74 are omitted.

As shown in FIG. 15, in a side view of the vehicle, the front end 45c of the hydraulic unit 45 is located rearward of the front end 44c of the engine control unit 44. In a side view of the vehicle, the front end 45c of the hydraulic unit 45 is located forward of the rear end 44d of the engine control unit 44. In a side view of the vehicle, the rear end 45d of the hydraulic unit 45 is located rearward of the rear end 44d of the engine control unit 44.

As shown in FIG 2, the hydraulic unit 45 overlaps at least a part of the head pipe 11 in the front view of the vehicle. The hydraulic unit 45 overlaps the engine control unit 44 in the front view of the vehicle.

As shown in FIG 14, in the plan view of the vehicle, the hydraulic unit 45 overlaps the vehicle center line C1 extending in the longitudinal direction of the vehicle. In the plan view of the vehicle, the hydraulic unit 45 overlaps at least a part of the engine control unit 44. In the plan view of the vehicle, the hydraulic unit 45 overlaps at least a part of the head pipe 11. The hydraulic unit 45 is smaller than the engine control unit 44 in the vehicle width direction. The left end of the hydraulic unit 45 is located to the right side of the left end of the engine control unit 44. The right end portion of the hydraulic unit 45 is located to the left side of the right end portion of the engine control unit 44.

In the straddled vehicle 1 according to the present embodiment described above, by placing the heavy weight hydraulic unit 45 and the engine control unit 44 between the head pipe 11 and the head light 37, the load distribution on the front wheel 5 can be increased. As a result, it is possible to make the front-rear load distribution of the straddled vehicle 1 as close as possible to 50:50, and to improve the operability of the straddled vehicle 1.

The hydraulic unit 45 is disposed between the engine control unit 44 and the head pipe 11 in the longitudinal direction of the vehicle. Therefore, the hydraulic unit 45 can be arranged compactly in front of the head pipe 11, and the hydraulic unit 45 can be arranged close to the head pipe 11. As a result, the movement of the brake hoses 71 and 72 due to the movement of the front wheel 5 can be kept small, and the arrangement of the brake hoses 71 and 72 becomes easy.

In the plan view of the vehicle, the engine control unit 44 and the hydraulic unit 45 overlap the vehicle center line C1 extending in the longitudinal direction of the vehicle. Therefore, by arranging the heavy engine control unit 44 and the hydraulic unit 45 at the center of the vehicle, the straight line stability of the straddled vehicle 1 can be improved.

In the plan view of the vehicle, the hydraulic unit 45 overlaps at least a part of the head pipe 11 and at least a part of the engine control unit 44. Therefore, it is possible to arrange the engine control unit 44 and the hydraulic unit 45 compactly in the vicinity of the head pipe 11.

In the front view of the vehicle, the hydraulic unit 45 overlaps at least a part of the head pipe 11 and at least a part of the engine control unit 44. Therefore, it is possible to arrange the engine control unit 44 and the hydraulic unit 45 compactly in the vicinity of the head pipe 11.

In a side view of the vehicle, the upper end 45b of the hydraulic unit 45 is located above the upper end 44b of the engine control unit 44. Therefore, it is easy to access the hydraulic unit 45 from above. This improves the maintainability of the hydraulic unit 45.

In a side view of the vehicle, the lower end 45a of the hydraulic unit 45 is located lower than the upper end 44b of the engine control unit 44. Therefore, it is possible to arrange the engine control unit 44 and the hydraulic unit 45 compactly.

In a side view of the vehicle, the first connection port 452 and the second connection port 453 of the hydraulic unit 45 are located above the engine control unit 44. Therefore, access to the connection ports 452 and 453 becomes easy. This improves the maintainability of the hydraulic unit 45.

In a side view of the vehicle, the head pipe 11 is disposed to be inclined rearward and upward. Further, in the side view of the vehicle, the engine control unit 44 is disposed to be inclined forward and upward. Therefore, a large space for disposing the hydraulic unit 45 can be secured between the head pipe 11 and the engine control unit 44. In addition, access to the hydraulic unit 45 from above is facilitated.

The stay 57 is attached to the head pipe 11 and supports the engine control unit 44 and the hydraulic unit 45. Therefore, the engine control unit 44 and the hydraulic unit 45 are supported by the common stay 57. Thereby, the number of parts can be reduced.

The headlight 37 is supported by the stay 57. Therefore, the headlight 37, the engine control unit 44 and the hydraulic unit 45 are supported by the common stay 57. Thereby, the number of parts can be reduced.

In a side view of the vehicle, the engine 26 is disposed below the seat 6. Therefore, the fact that the front-rear load distribution tends to be greatly biased toward the rear side due to the weight of the engine 26 can be alleviated by the heavy-weight hydraulic unit 45 and the engine control unit 44.

Although the embodiment of the present invention has been described above, the present invention is not limited to the above-described embodiment, and various modifications are possible without departing from the scope of the invention, as defined by the appended claims.

The straddled vehicle 1 is not limited to a scooter type vehicle, but may be another type of vehicle such as a moped. The number of front wheels is not limited to one but may be two or more. Alternatively, the number of rear wheels is not limited to one and may be two or more.

The engine control unit 44 may have a control function such as an idling stop. The idling stop is a function of automatically stopping the engine 26 when the vehicle is stopped and automatically restarting the engine 26 when the vehicle starts.

The structure of the engine control unit 44 is not limited to that of the above-described embodiment. For example, the engine control unit 44 may be longer in the length direction (Y) than in the width direction (X). The arrangement of the engine control unit 44 is not limited to that of the above-described embodiment. For example, the engine control unit 44 may be disposed along the vertical direction.

The structure of the stay 57 is not limited to the structure of the above embodiment and may be changed. The structure and arrangement of the hydraulic unit 45 is not limited to the arrangement of the above embodiment and may be changed. For example, the upper surface 451 of the hydraulic unit 45 may be inclined with respect to the vehicle width direction and / or the longitudinal direction of the vehicle.

## Claims

1. A straddled vehicle (1), comprising:
a vehicle body frame (2) including a head pipe (11);
a headlight (37) disposed forward of the head pipe (11);
an engine (26) supported by the vehicle body frame (2);
a starter generator (41) configured to generate an electric power and start the engine (26);
an engine control unit (44) including a command unit (46) for outputting a command signal to the engine (26) and a regulator (47) connected to the starter generator (41);
a steering device (3) supported by the head pipe (11);
a front wheel (5) rotatably supported by the steering device (3); and
a front brake (19) configured to brake the front wheel (5),
**characterized by**
a hydraulic unit (45) for ABS;
a brake hose (71) connecting the front brake (19) and the hydraulic unit (45), wherein
the engine control unit (44) is disposed between the head pipe (11) and the headlight (37) in a longitudinal direction of the vehicle (1),
the hydraulic unit (45) is disposed between the engine control unit (44) and the head pipe (11) in the longitudinal direction of the vehicle (1), and
the engine control unit (44) and the hydraulic unit (45) overlap with a vehicle center line (C1) extending in the longitudinal direction of the vehicle (1).

2. The straddled vehicle (1) according to claim 1, wherein
in a plan view of the vehicle (1), the hydraulic unit (45) overlaps at least a part of the engine control unit (44).

3. The straddled vehicle (1) according to claim 1 or 2, wherein
in the plan view of the vehicle (1), the hydraulic unit (45) overlaps at least a part of the head pipe (11) and at least a part of the engine control unit (44).

4. The straddled vehicle (1) according to any one of claims 1 to 3, wherein
in a front view of the vehicle (1), the hydraulic unit (45) overlaps at least a part of the engine control unit.(44).

5. The straddled vehicle (1) according to any one of claims 1 to 4, wherein
in the front view of the vehicle (1), the hydraulic unit (45) overlaps at least a part of the head pipe (11) and at least a part of the engine control unit (44).

6. The straddled vehicle (1) according to any one of claims 1 to 5, wherein
in the side view of the vehicle (1), an upper end of the hydraulic unit (45) is located above an upper end of the engine control unit (44).

7. The straddled vehicle (1) according to any one of claims 1 to 6, wherein
in the side view of the vehicle (1), a lower end of the hydraulic unit (45) is located lower than the upper end of the engine control unit (44).

8. The straddled vehicle (1) according to any one of claims 1 to 7, wherein
the hydraulic unit (45) includes a connection port (452) to which the brake hose (71) is connected,
in the side view of the vehicle (1), the connection port (452) is located above the engine control unit (44).

9. The straddled vehicle (1) according to any one of claims 1 to 8, wherein
in the side view of the vehicle (1), the head pipe (11) is disposed to be inclined rearward and upward,
in the side view of the vehicle (1), the engine control unit (44) is disposed to be inclined forward and upward.

10. The straddled vehicle (1) according to any one of claims 1 to 9, further comprising
a stay (57) attached to the head pipe (11) and supporting the engine control unit (44) and the hydraulic unit (45).

11. The straddled vehicle (1) according to claim 10, wherein the headlight (37) is supported by the stay.

12. The straddled vehicle (1) according to any one of claims 1 to 11, further comprising
a seat (6) disposed rearward of the head pipe (11), wherein
in the side view of the vehicle (1), the engine (26) is disposed below the seat (6).

## Patentansprüche

1. Ein gespreiztes Fahrzeug (1), umfassend:
einen Fahrzeugkarosserierahmen (2) mit einem Kopfrohr (11);
einen Scheinwerfer (37), der vor dem Kopfrohr (11) angeordnet ist;
einen Motor (26), der von dem Fahrzeugkörperrahmen (2) getragen wird;
einen Startergenerator (41), der konfiguriert ist eine elektrische Leistung zu erzeugen und den Motor (26) zu starten;
eine Motorsteuereinheit (44) mit einer Befehlseinheit (46) zur Ausgabe eines Befehlssignals an den Motor (26) und einem mit dem Startergenerator (41) verbundenen Regler (47)
eine Lenkvorrichtung (3), die von dem Kopfrohr (11) getragen wird;
ein Vorderrad (5), das von der Lenkvorrichtung (3) drehbar gelagert ist; und
eine Vorderbremse (19), die zum Abbremsen des Vorderrads (5) konfiguriert ist,
**gekennzeichnet durch**
eine Hydraulikeinheit (45) für ABS;
eine Bremsleitung (71), die die Vorderradbremse (19) und die Hydraulikeinheit (45) verbindet, wobei
die Motorsteuereinheit (44) zwischen dem Kopfrohr (11) und dem Scheinwerfer (37) in Längsrichtung des Fahrzeugs (1) angeordnet ist,
die Hydraulikeinheit (45) in Längsrichtung des Fahrzeugs (1) zwischen der Motorsteuereinheit (44) und dem Kopfrohr (11) angeordnet ist, und
die Motorsteuereinheit (44) und die Hydraulikeinheit (45) sich mit einer in Längsrichtung des Fahrzeugs (1) verlaufenden Fahrzeugmittellinie (C1) überlappen.

2. Das gespreiztes Fahrzeug (1) gemäß Anspruch 1, wobei
in der Draufsicht auf das Fahrzeug (1) die Hydraulikeinheit (45) zumindest einen Teil der Motorsteuereinheit (44) überdeckt.

3. Das gespreiztes Fahrzeug (1) gemäß Anspruch 1 oder 2, wobei
in der Draufsicht auf das Fahrzeug (1) die Hydraulikeinheit (45) mindestens einen Teil des Kopfrohrs (11) und mindestens einen Teil der Motorsteuereinheit (44) überdeckt.

4. Das gespreiztes Fahrzeug (1) gemäß einem der Ansprüche 1 bis 3, wobei
in der Frontansicht des Fahrzeugs (1) die Hydraulikeinheit (45) zumindest einen Teil des Motorsteuergeräts (44) überdeckt.

5. Das gespreiztes Fahrzeug (1) gemäß einem der Ansprüche 1 bis 4, wobei
in der Frontansicht des Fahrzeugs (1) die Hydraulikeinheit (45) mindestens einen Teil des Kopfrohrs (11) und mindestens einen Teil des Motorsteuergeräts (44) überdeckt.

6. Das gespreiztes Fahrzeug (1) gemäß einem der Ansprüche 1 bis 5, wobei
in der Seitenansicht des Fahrzeugs (1) sich ein oberes Ende der Hydraulikeinheit (45) oberhalb eines oberen Endes der Motorsteuereinheit (44) befindet.

7. Das gespreiztes Fahrzeug (1) gemäß einem der Ansprüche 1 bis 6, wobei
in der Seitenansicht des Fahrzeugs (1) ein unteres Ende der Hydraulikeinheit (45) niedriger angeordnet ist als das obere Ende der Motorsteuereinheit (44).

8. Das gespreiztes Fahrzeug (1) gemäß einem der Ansprüche 1 bis 7, wobei
die Hydraulikeinheit (45) einen Anschluss (452) aufweist, an den der Bremsschlauch (71) angeschlossen wird,
in der Seitenansicht des Fahrzeugs (1) sich der Anschluss (452) oberhalb der Motorsteuereinheit (44) befindet.

9. Das gespreiztes Fahrzeug (1) gemäß einem der Ansprüche 1 bis 8, wobei
in der Seitenansicht des Fahrzeugs (1) das Kopfrohr (11) nach hinten und nach oben geneigt angeordnet ist,
in der Seitenansicht des Fahrzeugs (1) die Motorsteuereinheit (44) nach vorne und oben geneigt angeordnet ist.

10. Das gespreiztes Fahrzeug (1) gemäß einem der Ansprüche 1 bis 9, des Weiteren umfassend
eine am Kopfrohr (11) befestigte Stütze (57), die die Motorsteuereinheit (44) und die Hydraulikeinheit (45) trägt.

11. Das gespreiztes Fahrzeug (1) gemäß Anspruch 10, wobei
der Scheinwerfer (37) von der Stütze getragen wird.

12. Das gespreiztes Fahrzeug (1) gemäß einem der Ansprüche 1 bis 11, des Weiteren umfassend
einem Sitz (6), der hinter dem Kopfrohr (11) angeordnet ist, wobei
in der Seitenansicht des Fahrzeugs (1) der Motor (26) unterhalb des Sitzes (6) angeordnet ist.

## Revendications

1. Véhicule à selle (1) comprenant :
un cadre de véhicule (2) incluant un tube de fourche (11),
un bloc optique (37) disposé en avant du tube de fourche (11),
un moteur (26) supporté par le cadre du véhicule (2),
un générateur de démarrage (41) configuré pour générer de l'énergie électrique et démarrer le moteur (26),
une unité de commande de moteur (44) incluant une unité d'ordre (46) destinée à délivrer un signal d'ordre au moteur (26) et un régulateur (47) connecté au générateur de démarrage (41),
un dispositif de direction (3) supporté par le tube de fourche (11),
une roue avant (5) supportée en rotation par le dispositif de direction (3), et
un frein avant (19) configuré pour freiner la roue avant (5),
**caractérisé par :**
une unité hydraulique (45) destinée au freinage ABS,
un tuyau de frein (71) reliant le frein avant (19) et l'unité hydraulique (45), où
l'unité de commande de moteur (44) est disposée entre le tube de fourche (11) et le bloc optique (37) dans la direction longitudinale du véhicule (1),
l'unité hydraulique (45) est disposée entre l'unité de commande de moteur (44) et le tube de fourche (11) dans la direction longitudinale du véhicule (1), et
l'unité de commande de moteur (44) et l'unité hydraulique (45) chevauchent l'axe central du véhicule (C1) s'étendant dans la direction longitudinale du véhicule (1).

2. Véhicule à selle (1) selon la revendication 1, dans lequel :
selon une vue de plan du véhicule (1), l'unité hydraulique (45) chevauche au moins une partie de l'unité de commande de moteur (44).

3. Véhicule à selle (1) selon la revendication 1 ou la revendication 2, dans lequel :
selon la vue de plan du véhicule (1), l'unité hydraulique (45) chevauche au moins une partie du tube de fourche (11) et au moins une partie de l'unité de commande de moteur (44).

4. Véhicule à selle (1) selon l'une quelconque des revendications 1 à 3, dans lequel :
selon une vue de face du véhicule (1), l'unité hydraulique (45) chevauche au moins une partie de l'unité de commande de moteur (44).

5. Véhicule à selle (1) selon l'une quelconque des revendications 1 à 4, dans lequel :
selon la vue de face du véhicule (1), l'unité hydraulique (45) chevauche au moins une partie du tube de fourche (11) et au moins une partie de l'unité de commande de moteur (44).

6. Véhicule à selle (1) selon l'une quelconque des revendications 1 à 5, dans lequel :
selon la vue latérale du véhicule (1), l'extrémité supérieure de l'unité hydraulique (45) est située au-dessus de l'extrémité supérieure de l'unité de commande de moteur (44) .

7. Véhicule à selle (1) selon l'une quelconque des revendications 1 à 6, dans lequel :
selon la vue latérale du véhicule (1), l'extrémité inférieure de l'unité hydraulique (45) est située plus bas que l'extrémité supérieure de l'unité de commande de moteur (44) .

8. Véhicule à selle (1) selon l'une quelconque des revendications 1 à 7, dans lequel :
l'unité hydraulique (45) inclut un port de connexion (452) auquel est relié le tuyau de frein (71),
selon la vue latérale du véhicule (1), le port de connexion (452) est situé au-dessus de l'unité de commande de moteur (44).

9. Véhicule à selle (1) selon l'une quelconque des revendications 1 à 8, dans lequel :
selon la vue latérale du véhicule (1), le tube de fourche (11) est disposé pour être incliné vers l'arrière et vers le haut,
selon la vue latérale du véhicule (1), l'unité de commande de moteur (44) est disposée pour être inclinée vers l'avant et vers le haut.

10. Véhicule à selle (1) selon l'une quelconque des revendications 1 à 9, comprenant en outre :
une suspension (57) fixée au tube de fourche (11) et supportant l'unité de commande de moteur (44) et l'unité hydraulique (45).

11. Véhicule à selle (1) selon la revendication 10, dans lequel le bloc optique (37) est supporté par la suspension.

12. Véhicule à selle (1) selon l'une quelconque des revendications 1 à 11, comprenant en outre :
un siège (6) disposé à l'arrière du tube de fourche (11), où
selon la vue latérale du véhicule (1), le moteur (26) est disposé en dessous du siège (6).
